# EUROPÄISCHE PATENTANMELDUNG

(11) **EP 2 385 325 A2**
(43) Veröffentlichungstag der Anmeldung: **09.11.2011**
(21) Anmeldenummer: 11162798.0
(22) Anmeldetag: 18.04.2011
(51) Int. Cl.: F24J 2/52, F16B 5/06

(54) **System zum Befestigen eines Anbauteiles an Montageschienen**

(30) Priorität: 06.05.2010 DE 102010028653
(71) Anmelder: HILTI Aktiengesellschaft, 9494 Schaan (LI)
(72) Erfinder: Ostermeier, Peter, 86911, Diessen (DE); Burtscher, Norbert, 6712, Thüringen (AT); Hermann, Fritz, 86899, Landsberg (DE)

(57) **Zusammenfassung**

Bei einem System zum Befestigen eines Anbauteiles (3) an wenigstens einem Trägerteil (5) mittels wenigstens einer Vorrichtung (2), umfassend die wenigstens eine Vorrichtung (2) mit wenigstens einem bewegbaren Halteelement (8), welches oder welche beim Einführen in eine Öffnung des Trägerteiles (5) aufgrund eines Kontaktes zwischen dem wenigstens einen Halteelement (8) und dem Trägerteil (5) in eine Voreingreifstellung bewegbar ist und mittels einer Rückbewegung des wenigstens einen Halteelementes (8) nach dem Einführen in die Öffnung in eine Hintergreifstellung bewegbar ist, so dass das Trägerteil (5) von dem wenigstens einen Halteelement (8) an einer Greiffläche (22) hintergreifbar ist für eine formschlüssige Verbindung zwischen dem wenigstens einen Halteelement (8) und dem Trägerteil (5) und wenigstens einem Mittel (25) zur Fixierung des Anbauteiles (3) an der wenigstens einen Vorrichtung (2) und wenigstens einem Trägerteil (5), sollen Anbauteile (3) an einem Trägerteil (5) ohne Werkzeuge mit einem einfachen technischen Aufbau mittels des Systems (2) befestigt werden können. Diese Aufgabe wird dadurch gelöst, dass das wenigstens eine Halteelement (8) mittels wenigstens einem elastischen Element (9) von der Voreingreifstellung in die Hintergreifstellung bewegbar ist und/oder das Trägerteil (5) eine Öffnung aufweist und die Öffnung ein Ende eines von dem Trägerteil (5) eingeschlossenen Innenraumes (20), insbesondere eine Trägernut (21), ist und/oder das Trägerteil (5) mit der Greiffläche (22) ausgebildet ist und in der Hintergreifstellung die Greiffläche (22) von dem wenigstens einen Halteelement (8) formschlüssig hintergriffen ist.

## Beschreibung

Die vorliegende Erfindung betrifft ein System zum Befestigen eines Anbauteiles an einem Trägerteil gemäß dem Oberbegriff des Anspruches 1.

In der Bautechnik werden Systeme zum Befestigen eines Anbauteils an einem Trägerteil verwendet, um Anbauteile an dem Trägerteil zu befestigen. Als Anbauteile kommen beispielsweise Fotovoltaik-Module, Fassadenelemente oder Leitungen als Bestandteil einer Wasserheizungs-oder Elektroinstallation in Betracht. Als Trägerteile werden im Allgemeinen Trag- oder Montageschienen verwendet.

Die DE 103 13 564 A1 zeigt ein Verbindungselement für Bauteile. Die Bauteile sind mit länglichen Ausnehmungen versehen, die zur Aufnahme des Verbindungselementes miteinander ausgerichtet werden, wobei das Verbindungselement als einteiliger Federclip ausgebildet ist, der diametral abstehende Federarme aufweist, deren Breite zum Einführen in die länglichen Ausnehmungen ausgelegt ist, wobei den freien Enden der Federarme in einem axialen Abstand jeweils ein Widerlagerabschnitt gegenüberliegt, der an dem Federclip angeformt ist und einen Eingriffabschnitt für ein Montagewerkzeug aufweist.

Aus der DE 10 2006 011 836 B3 ist ein Befestigungselement mit einer Grundplatte bekannt. Von der Grundplatte erstrecken sich gegenüberliegend erste Arme, die jeweils einen ersten Anlageabschnitt mit einem ersten Abstand zur Grundplatte aufweisen und wenigstens zwei sich gegenüberliegende zweite Arme, die einen zweiten Anlageabschnitt mit einem zweiten Abstand zur Grundplatte aufweisen. Die ersten Arme weisen dabei Betätigungsabschnitte auf, welche jeweils als eine Öse aufweisende Fläche ausgebildet sind.

Die DE 10 2007 042 484 B3 zeigt eine Vorrichtung zum Befestigen eines Anbauteils an einem Trägerteil mit einem zur Auflage an dem Anbauteil oder dem Trägerteil bestimmten Kopfteil, das über seitlich überstehende Auflageabschnitte verfügt. Eine federnde Vorderwandanordnung weist zwei Sperrflügel auf, die in etwa rechtwinklig zu der Vorderwand ausgerichtet sind. Die Sperrflügel weisen Raststufen auf, welche in einer Hintergreifstellung der Vorrichtung an dem Trägerteil aufliegen.

Aus der DE 20 2005 003 224 U1 ist ein Einsetzteil zur Halterung eines Nutensteins in einer hinterschnittenen Profilnut einer Profilleiste bekannt. Das Einsetzteil weist im eingesetzten Zustand dieselbe zu einer Leistenachse der Profilleiste im Wesentlichen parallele Längsachse auf, wobei das Einsetzteil einen Sitz für den Nutenstein mit axial gegenüberliegenden Sitzbegrenzungsflächen, zwischen denen der Nutenstein aufnehmbar ist, sowie zwischen den Sitzbegrenzungsflächen angeordneten Auflagerflächen zur Auflagerung des Nutensteines aufweist. Dabei weist das Einsetzteil erste Stützflächen auf, welche im eingesetzten Zustand des Einsetzteils eine Abstützung desselben an Hinterschneidungsflächen der Profilnut gestatten, wobei wenigstens ein Teil der ersten Stützflächen derart flexibel auslenkbar angeordnet ist, dass das Einsetzteil durch die Nutöffnung der Profilnut hindurch in diese einsetzbar ist.

Die DE 20 2006 018 426 U1 zeigt ein Montageschienensystem zur Halterung von Gegenständen, insbesondere Flächenkörpern, wie Solarmodule oder Solarkollektoren, wobei mindestens ein schienenartiges Profil mit mindestens zwei in Längsrichtung des schienenartigen Profils verlaufende Profilleisten und mindestens ein federelastisches Klammerelement zur Befestigung des schienenartigen Profils auf einen Untergrund und/oder zur Halterung von Gegenständen am schienenartigen Profil mit mindestens zwei sich gegenüberstehenden, aneinander gegenüberliegenden Seiten des schienenartigen Profils angreifenden Federschenkeln, die mit jeweils einer der Profilleisten so zusammenwirken, dass das federelastische Klammerelement am schienenartigen Profil federelastisch fixierbar ist.

Die Aufgabe der vorliegenden Erfindung besteht darin, ein System zur Verfügung zu stellen, bei dem Anbauteile an einem Trägerteil ohne Werkzeuge mit einem einfachen technischen Aufbau mittels des Systems befestigt werden können. Des Weiteren soll das System in der Herstellung preiswert sein und eine einfache und zuverlässige Handhabung ermöglichen.

Diese Aufgabe wird gelöst mit einem System zum Befestigen eines Anbauteiles an wenigstens einem Trägerteil mittels wenigstens einer Vorrichtung, umfassend die wenigstens eine Vorrichtung mit wenigstens einem bewegbaren Halteelement, welches oder welche beim Einführen in eine Öffnung des Trägerteiles aufgrund eines Kontaktes zwischen dem wenigstens einen Halteelement und dem Trägerteil in eine Voreingreifstellung bewegbar ist und mittels einer Rückbewegung des wenigstens einen Halteelementes nach dem Einführen in die Öffnung in eine Hintergreifstellung bewegbar ist, so dass das Trägerteil von dem wenigstens einen Halteelement an einer Greiffläche hintergreifbar ist für eine form-und/oder kraftschlüssige Verbindung zwischen dem wenigstens einen Halteelement und dem Trägerteil und wenigstens eine Mittel zur Fixierung des Anbauteiles an der wenigstens einen Vorrichtung, wenigstens ein Trägerteil, wobei die Vorrichtung wenigstens ein elastisches Element umfasst und das wenigstens eine Halteelement mittels des wenigstens einen elastischen Elementes von der Voreingreifstellung in die Hintergreifstellung bewegbar ist und/oder das Trägerteil die Öffnung aufweist und die Öffnung ein Ende eines von dem Trägerteil eingeschlossenen Innenraumes, insbesondere eine Trägernut, ist und/oder die Greiffläche mit mehreren Längsnuten versehen ist zum Hintergreifen mit dem wenigstens einem bewegbaren Halteelement und/oder das Trägerteil mit der Greiffläche ausgebildet ist und in der Hintergreifstellung die Greiffläche von dem wenigstens einen Halteelement formschlüssig hintergriffen ist.

Insbesondere ist das wenigstens eine Halteelement als das elastische Element ausgebildet. Das wenigstens eine Halteelement und das elastische Element bzw. das wenigstens eine elastische Element bilden somit ein Bauteil, so dass damit für das Halteelement und das elastische Element nur ein Bauteil hergestellt bzw. vorgehalten werden muss.

In einer weiteren Ausgestaltung ist das elastische Element als eine Blattfeder ausgebildet. Eine Blattfeder ist in der Herstellung preiswert und einfach an der Vorrichtungsschiene der Vorrichtung zu befestigen.

In einer ergänzenden Ausführungsform ist die Blattfeder mit wenigstens einem Rastarm zur Verrastung an der Greiffläche ausgebildet und/oder der wenigstens eine Rastarm ist an der Greiffläche verrastet.

Vorzugsweise ist die das wenigstens eine Halteelement, insbesondere die Blattfeder, form- und/oder kraftschlüssig an der wenigstens einen Vorrichtung befestigt.

In einer Variante umfasst die wenigstens eine Vorrichtung eine Vorrichtungsschiene oder eine Vorrichtungsleiste und/oder die wenigstens eine Vorrichtung umfasst eine Trägerplatte oder ein Gitter als Mittel zur Fixierung des Anbauteiles an der wenigstens einen Vorrichtung. Die Vorrichtungsschiene bzw. Vorrichtungsleiste kann ein Alu- oder Zink-Druckguss sein, vorzugsweise ist sie aber ein Strangpressprofil und damit in der Herstellung besonders preiswert. Die Begriffe "Vorrichtungsschiene" bzw. "Vorrrichtungsieiste" sollen in vorliegenden Fall nicht dahingehend einschränkend verstanden werden, dass diese Bauteile in ihrer Ausbreitung länger als breit verstanden werden müssen; vielmehr sind hierunter auch Bauteile zu verstehen, die breiter als lang sein können.

Zweckmäßig weist die Vorrichtungsschiene in Längsrichtung der Vorrichtungsschiene wenigstens einen Hohlraum auf.

Zweckmäßig ist an der wenigstens einen Vorrichtung, insbesondere unterseitig an der Trägerplatte, ein Vorrichtungssteg mit einem Absatz ausgebildet und die Blattfeder weist eine Haltezunge auf, welche den Absatz an der Vorrichtung hintergreift und/oder an der wenigstens einen Vorrichtung ist eine Vorrichtungsnut, insbesondere zwischen der Trägerplatte und dem Vorrichtungssteg, ausgebildet und/oder an der wenigstens einen Vorrichtung, insbesondere dem Vorrichtungssteg, ist ein Vorrichtungsschlitz ausgebildet und die Blattfeder greift in den Vorrichtungsschlitz ein.

In einer weiteren Ausführungsform sind an der Vorrichtung in Längsrichtung mehrere Halteelemente befestigt und/oder das wenigstens eine Halteelement ist in der Hintergreifstellung wenigstens teilweise, insbesondere vollständig, in einem von dem Trägerteil eingeschlossenen Innenraum, insbesondere der Trägernut, angeordnet und/oder eine kraft-und/oder formschlüssige Verbindung zwischen dem wenigstens einen Halteelement und dem Trägerteil ist herstellbar oder besteht.

Insbesondere ist die Greiffläche als eine im Wesentlichen ebene Fläche ausgebildet.

In einer weiteren Ausgestaltung ist an dem Trägerteil ein Tragsteg ausgebildet und der Tragsteg begrenzt den Innenraum, insbesondere die Trägernut, teilweise und ist in der Hintergreifstellung der Tragsteg in der Vorrichtungsnut angeordnet.

In einer ergänzenden Variante liegt in der Hintergreifstellung der Tragsteg auf der Vorrichtung, insbesondere der Trägerplatte, auf.

In einer weiteren Variante ist das Trägerteil eine Tragschiene oder eine Montageschiene.

In einer weiteren Ausgestaltung weist das System zwei, insbesondere identische, Trägerteile auf und die beiden Trägerteile sind im Wesentlichen parallel zueinander ausgerichtet und vorzugsweise sind die Öffnungen der Innenräume der beiden Trägerteile in die gleiche Richtung ausgerichtet.

Insbesondere ist an jedem der beiden Trägerteile wenigstens eine Vorrichtung befestigt, vorzugsweise sind an jedem der beiden Trägerteile wenigstens zwei Vorrichtungen befestigt. Es sind jedoch auch Ausgestaltungen möglich, bei denen drei oder mehrere Trägerteile zum Einsatz kommen.

In einer weiteren Ausgestaltung ist in der Hintergreifstellung das elastische Element vorgespannt.

In einer zusätzlichen Ausgestaltung umfasst das wenigstens eine Mittel die Trägerplatte oder das Gitter zur, vorzugsweise unmittelbaren, Fixierung der Vorrichtung an dem Anbauteil.

In einer weiteren Ausgestaltung besteht das Trägerteil und/oder die Vorrichtung und/oder die Vorrichtungsschiene und/oder die Trägerplatte und/oder das wenigstens eine Halteelement und/oder das wenigstens eine elastische Element wenigstens teilweise, insbesondere vollständig aus Metall, z. B. Aluminium oder Stahl oder Edelstahl, und/oder aus Kunststoff.

In einer weiteren Ausgestaltung ist die Vorrichtung mittels eines Schnapp-und/oder Einrastmechanismus, z. B. das elastische Element, an dem Trägerteil befestigbar.

In einer ergänzenden Ausgestaltung ist das wenigstens eine elastische Element in einer Voreingreifstellung nicht vorgespannt.

In einer weiteren Ausgestaltung umfasst das wenigstens eine Mittel eine Klebe-, Rast-, Niet- und/oder Schraubverbindung zur Fixierung des Anbauteiles an der Vorrichtung, insbesondere der Trägerplatte.

In einer ergänzenden Ausgestaltung ist die Öffnung eine Montageöffnung zur Befestigung der Vorrichtung an dem Trägerteil.

Im Nachfolgenden werden Ausführungsbeispiele der Erfindung unter Bezugnahme auf die beigefügten Zeichnungen näher beschrieben. Es zeigt:
- Fig. 1: einen Querschnitt eines Systems in einem Endmontagezustand,
- Fig. 2: einen Querschnitt eines Trägerteils in einem ersten Ausführungsbeispiel,
- Fig. 3: einen Querschnitt des Trägerteils in einem zweiten Ausführungsbeispiel,
- Fig. 4: einen Querschnitt einer Vorrichtungsschiene einer Vorrichtung,
- Fig.5: eine erste perspektivische Ansicht einer Blattfeder der Vorrichtung,
- Fig. 6: eine zweite perspektivische Ansicht der Blattfeder der Vorrichtung,
- Fig. 7: eine perspektivische Ansicht der Vorrichtung mit zwei Blattfedern,
- Fig. 8: einen Querschnitt der Vorrichtung mit dem Anbauteil und das Trägerteil in einer ersten Vormontagestellung,
- Fig. 9: einen Querschnitt der Vorrichtung mit dem Anbauteil und das Trägerteil in der zweiten Vormontagestellung und
- Fig. 10: einen Querschnitt der Vorrichtung ohne Anbauteil und das Trägerteil in einer Endmontagestellung mit der Blattfeder in einer Hintergreifstellung.

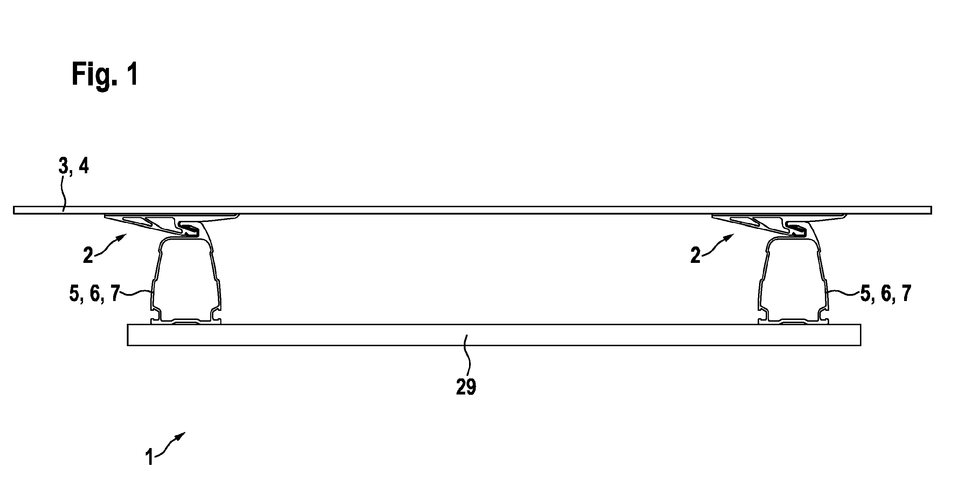

In der Bautechnik bzw. im Bauwesen werden Systeme 1 mit Vorrichtungen 2 zum Befestigen eines Anbauteiles 3 an einem Trägerteil 5 genutzt. Das Anbauteil 3 ist dabei beispielsweise ein Fotovoltaik-Modul4, ein Fassadenelement oder eine Leitung (nicht dargestellt) und das Trägerteil 5 eine Tragschiene 6 oder eine Montageschiene 7. Die beiden in Fig. 1 dargestellten Montageschienen 7 sind an einem Montageboden 29 parallel zueinander befestigt. Mit dem System 1 kann damit mittelbar das Anbauteil 3 an dem Trägerteil 5 befestigt werden.

Die Vorrichtung 2 umfasst dabei eine Vorrichtungsschiene 31 bzw. Vorrichtungsleiste mit einer Trägerplatte 26 als Mittel 25 zur Fixierung des Anbauteiles 3 an der Vorrichtung 2. Die Trägerplatte 26 ist an einer Befestigungsfläche 30 mit dem Anbauteil 3 (Fig. 1, 8 und 9) stoffschlüssig, beispielsweise mittels Kleben oder Schweißen, oder formschlüssig, beispielsweise mit nicht dargestellten Schrauben oder Nieten zur Herstellung einer Schraub- oder Nietverbindung, verbunden. Die Höhe der Rampe 28 der Trägerplatte 26 ist geringer als die Höhe der Schichtdicke eines eventuell verwendeten Klebstoffes zum Befestigen des Anbauteiles 3 an der Vorrichtungsschiene 31 (nicht dargestellt).

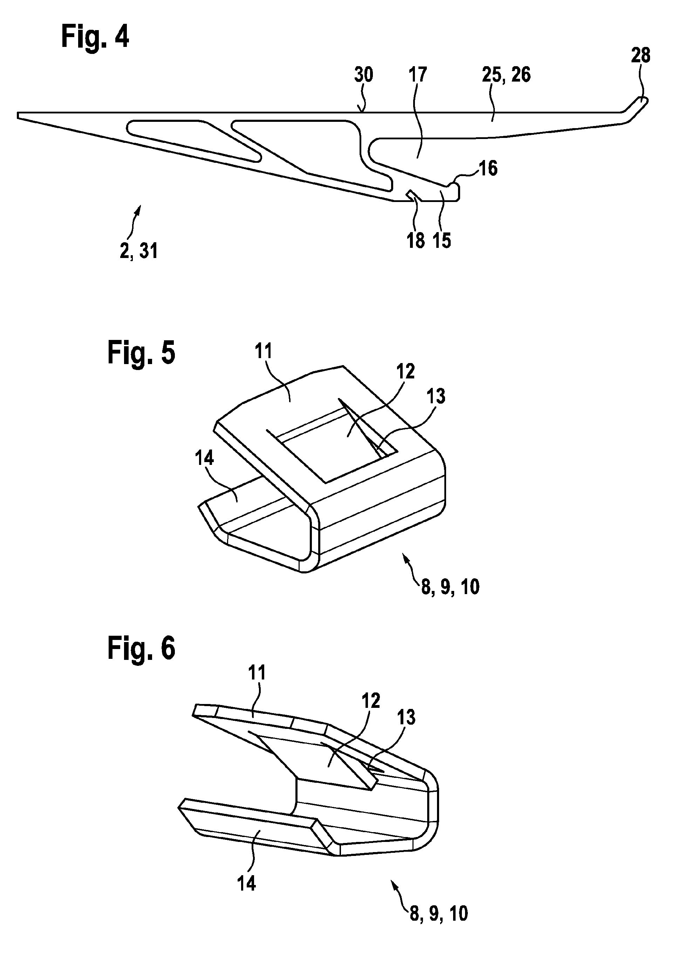

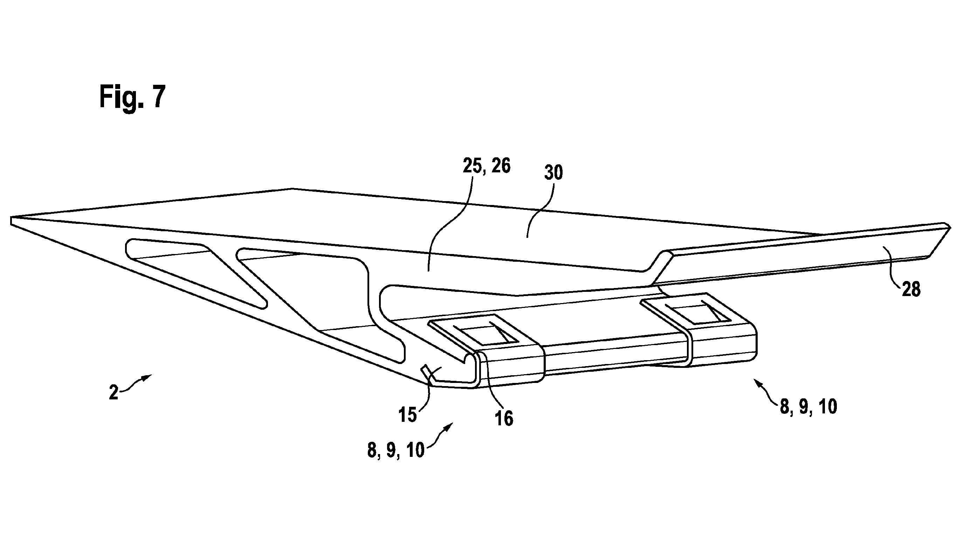

An der Vorrichtungsschiene 31 ist an der Befestigungsfläche 30 gegenüberliegenden Fläche der Trägerplatte 26 ein Vorrichtungssteg 15 vorhanden (Fig. 4, 7 und 8). Der Vorrichtungssteg 15 umschließt zusammen mit der Trägerplatte 26 eine Vorrichtungsnut 17. Am Ende des Vorrichtungssteges 15 ist ein Absatz 16 ausgebildet und außerdem ist unterseitig an dem Vorrichtungssteg 15 ein Vorrichtungsschlitz 18 vorhanden (Fig. 4 und 7). Eine Rampe 28 am Ende der Trägerplatte 26 dient als Montagehilfe beim Aufschieben der Vorrichtungsschiene 31 auf die Montageschiene 7. Die Vorrichtungsschiene 31 ist einteilig und vorzugsweise mittels Strangpressen preiswert hergestellt (Fig.4 und 7). An dem Vorrichtungssteg 15 der Vorrichtungsschiene 31 sind zwei Halteelemente 8 befestigt (Fig. 7). Die Halteelemente 8 stellen dabei als Blattfedern 10 ausgebildete elastische Elemente 9 dar (Fig. 5 und 6). Die Blattfedern 10 weisen eine Blattfederaussparung 13 mit einer Haltezunge 12 und einen Rastarm 11 auf. Ferner ist an der Blattfeder 10 auch eine Blattfederabkantung 14 ausgebildet. Zur Befestigung der Blattfedern 10 auf dem Vorrichtungssteg 15 werden die Blattfedern 10 mit einem rückseitigen Ende an dem Rastarm 11 auf den Vorrichtungssteg 15 aufgeschoben, so dass die Haltezunge 12 den Absatz 16 an dem Vorrichtungssteg 15 hintergreift und ferner die Blattfederabkantung 14 in dem Vorrichtungsschlitz 18 angeordnet (Fig. 7) ist. Dadurch ist die Blattfeder 10 form- und kraftschlüssig an dem Vorrichtungssteg 15 der Vorrichtungsschiene 31 befestigt.

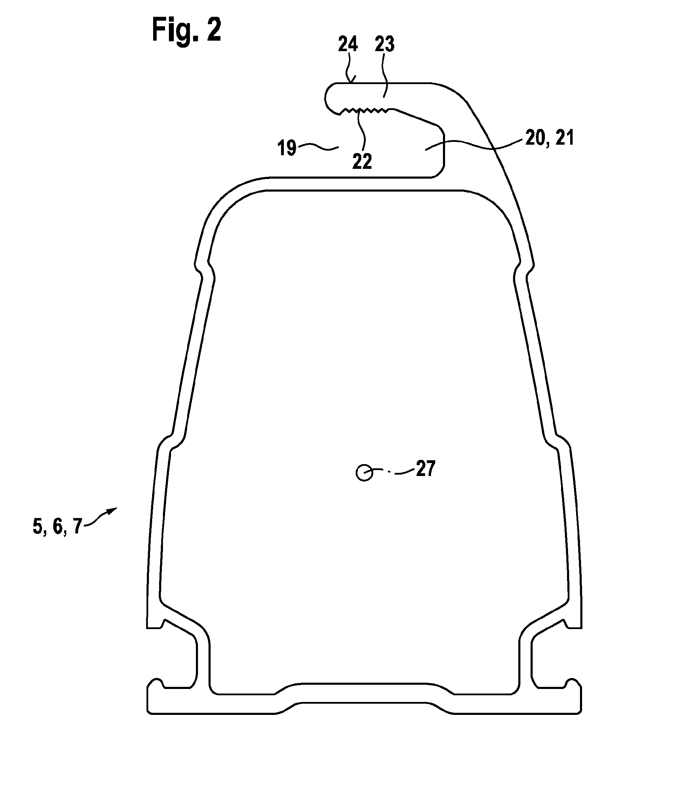

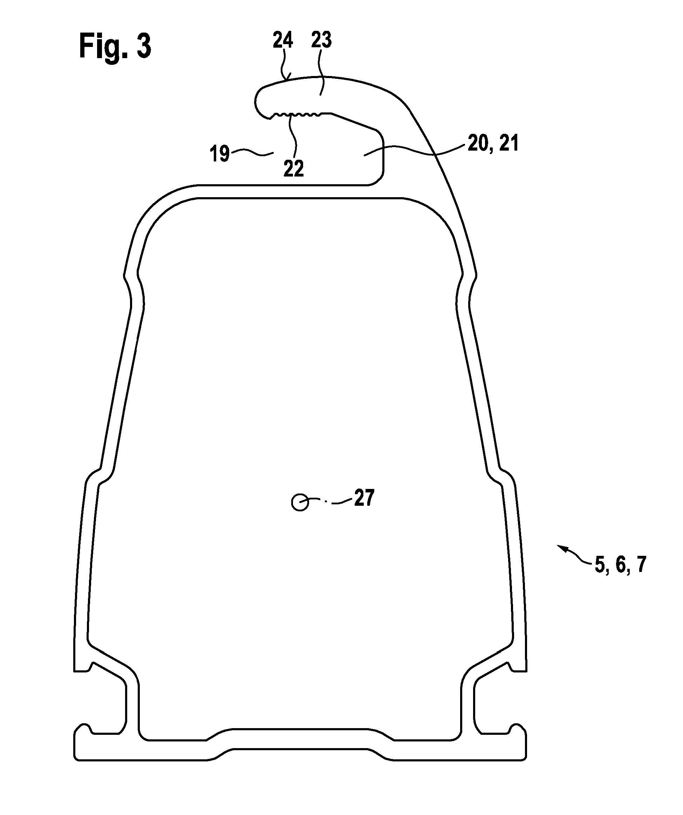

Die Montageschiene 7 (Fig. 2 und 3) ist ebenfalls ein Strangpressprofil und weist einen Tragsteg 23 auf. An der Oberseite des Tragsteges 23 ist eine Auflagefläche 24 für die Trägerplatte 26 vorhanden. Die Auflagefläche 24 kann dabei plan (Fig. 2) oder gekrümmt (Fig. 3) ausgebildet sein. Bei einer gekrümmten oder bogenförmigen Ausbildung der Auflagefläche 24 des Tragsteges 23 wird die Trägerplatte 26 gelenkig auf der Auflagefläche 24 gelagert. Somit können Ungenauigkeiten im Aufbau ausgeglichen und Spannungen in der Klebung zwischen Anbauteil 3 und der Vorrichtung 2 besser abgeleitete werden. Letzteres ist insbesondere bei leicht brüchigen Fotovoltaik-Modulen 4 von Interesse. Der Tragsteg 23 schließt mit einem übrigen Teil der Montageschiene 7 einen Innenraum 20 ein der eine Öffnung 19 aufweist. Der Innenraum 20 ist dabei als Trägernut 21 ausgebildet und weist parallel zu einer Schienenlängsachse 27 eine wesentlich größere Ausdehnung, beispielsweise um das wenigstens 2-, 5- oder 10-Fache, auf als senkrecht zu der Schienenlängsachse 27. Die Schienenlängsachse 27 steht dabei senkrecht auf der Zeichenebene von Fig. 2 und 3. An dem Tragsteg 23 ist an der dem Innenraum 20 zugewandten Seite eine Greiffläche 22 ausgebildet. Die Greiffläche 22 ist dabei mit Längsnuten parallel zu der Schienenlängsachse 27 versehen. An der Greiffläche 22 sind somit Zacken oder Rastnasen vorhanden, die der Rasterarm 11 der Blattfeder 10 hintergreifen kann. Dabei ist die erste in Fig. 2 und 3 links dargestellte Zacke oder Rastnase höher als die übrigen Zacken oder Rastnasen - gesehen in Richtung des Innenraumes 20.

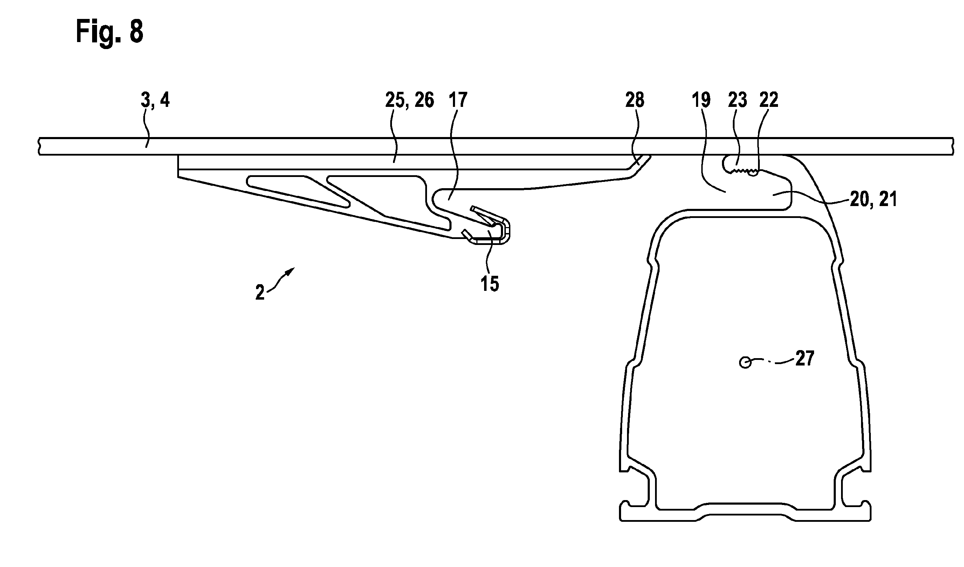

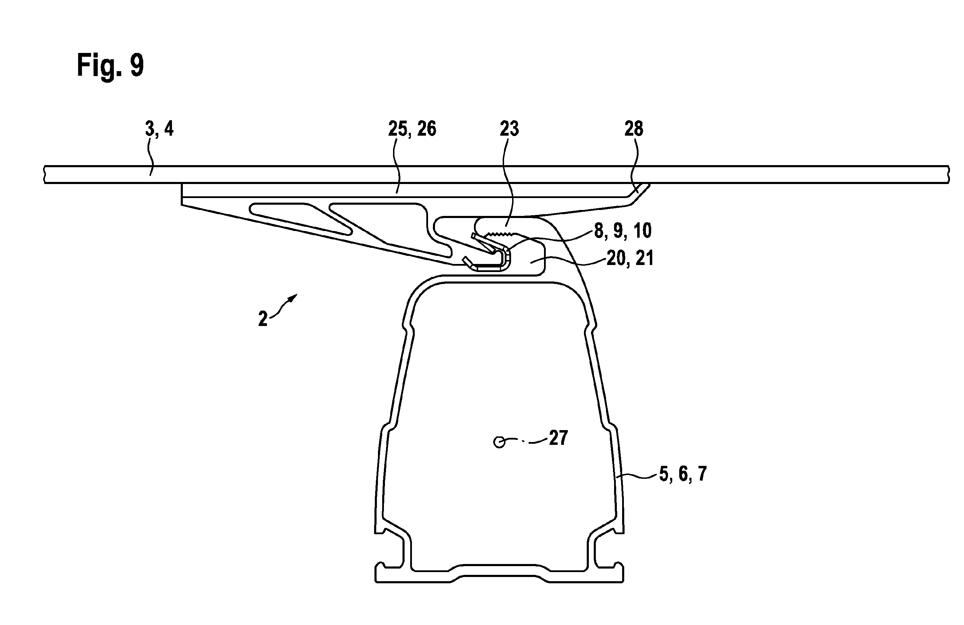

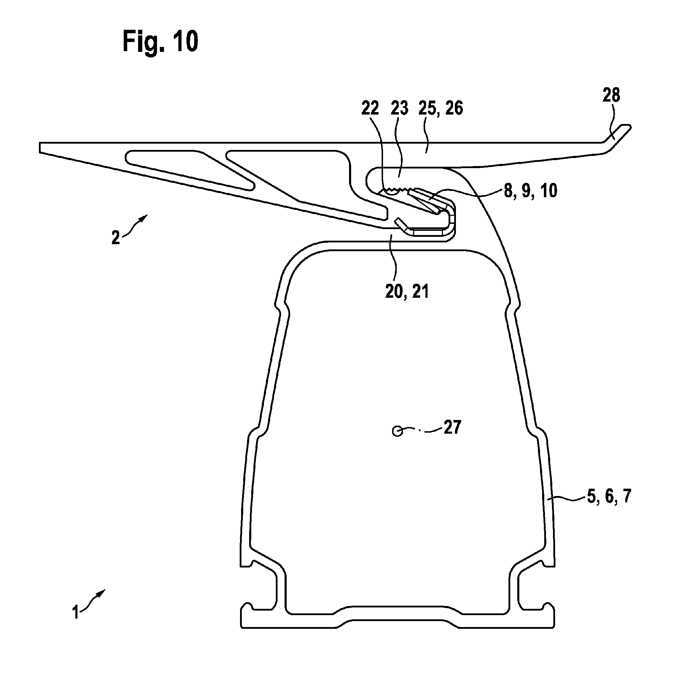

In Fig.8 ist eine erste Vormontagestellung der Vorrichtung 2 an der Montageschiene 7, in Fig. 9 eine zweite Vormontagestellung und in Fig. 10 eine Endmontagestellung dargestellt. In der ersten Vormontagestellung liegt das Anbauteil 3 als Fotovoltaik-Modul 4 auf der Auflagefläche 24 des Tragsteges 23 auf und die Rampe 28 der Trägerplatte 26 ist mit einem Abstand zu dem Tragsteg 23 angeordnet. In der ersten Vormontagestellung ist der Rastarm 11 der Blattfeder 10 nicht vorgespannt in einer Voreingreifstellung. Beim weiteren Bewegen der Vorrichtung 2 mit dem Anbauteil 3 nach rechts zu der Montageschiene 7 kommt die Rampe 28 der Trägerplatte 26 zum seitlichen Anliegen auf dem Tragsteg 23 der Montageschiene 7 (nicht dargestellt) und aufgrund der Rampenform wird die Trägerplatte 26 oberhalb des Tragsteges 23 bewegt, so dass die Trägerplatte 26 auf dem Tragsteg 23 aufliegt und der Tragsteg 23 wird in die Vorrichtungsnut 17 der Vorrichtungsschiene 31 eingeführt, so dass sich der Tragsteg 23 in der Vorrichtungsnut 17 befindet. Somit liegt die Trägerplatte 26 auf der Auflagefläche 24 des Tragsteges 23 auf und der Rastarm 11 der Blattfeder 10 liegt an der vordersten und größten Zacke bzw. Rastarm des an dem Tragsteg 23 ausgebildeten Greiffläche 22 an (Fig. 9). In dieser zweiten Vormontagestellung kann die Vorrichtung 2 senkrecht zu der Zeichenebene von Fig. 9 bewegt werden, d. h. parallel zu der Schienenlängsachse 27. Dies ermöglicht eine Nachjustierung bzw. eine Feinjustierung des Anbauteils 3 an den beiden Montageschienen 7. Erst nach dieser Feinjustierung des Anbauteiles 3 relativ zu den beiden Montageschienen 7 wird auf die Vorrichtung 2 und/oder das Anbauteil 3 eine ausreichend große Kraft aufgebracht, so dass der Rastarm 11 der Blattfeder 10 gemäß der Darstellung in Fig. 9 ausreichend weit nach unten bewegt wird entgegen der Vorspannkraft des Rastarmes 11, so dass der Rastarm 11 die äußerste Zacke hintergreift. Bei einem weiteren Bewegen des Anbauteiles 3 mit der Vorrichtung 2 in Richtung in den Innenraum 20 der Montageschiene 7 rastet der Rastarm 11 in die nachfolgenden Rastnasen der Greiffläche 22 ein. Dadurch ist die Vorrichtung 2 form- und kraftschlüssig mit einer Rastverbindung an der Montageschiene 7 befestigt. Im Endmontagezustand gemäß der Darstellung in Fig. 10 befindet sich somit der Rastarm 11 der Blattfeder 10 in einer Hintergreifstellung und ist dabei vorgespannt. Der Rastarm 11 kann dabei an unterschiedlichen Rastnasen der Greiffläche 22 verrastet werden, so dass dadurch ein Ausgleich im Abstand zwischen den beiden Montageschienen 7, beispielsweise aufgrund von Fertigungstoleranzen oder Montageungenauigkeiten der gesamten Struktur, möglich ist.

Die in Fig. 5 und 6 dargestellten Blattfedern 10 weisen an den Rastarmen 11 keine Laschen auf. Damit ist es nicht möglich, nach dem Einbringen der Vorrichtung 2 in die Endmontagestellung und dem Hintergreifen der Greiffläche 22 mit dem Rastarm 11 der Blattfedern 10 die Rastarme 11 wieder von der Hintergreifstellung zu lösen und dadurch das Anbauteil 3 mit der Vorrichtung 2 von den beiden Montageschienen 7 zu entfernen. Dies ermöglicht einen Diebstahlschutz. Abweichend hiervon (nicht dargestellt) kann an den beiden Rastarmen 11 der Blattfeder 10 seitlich jeweils eine Lasche vorhanden sein, so dass mit Hilfe eines Hilfs- oder Spezialwerkzeuges die Rastarme 11 aus der Verrastung mit der Greiffläche 22 bewegt werden können und dadurch die Vorrichtung 2 mit dem Anbauteil 3 wieder von der Montageschiene 7 entfernt werden kann.

Mit dem vorliegenden System kann somit beispielsweise ein im Wesentlichen rechteckförmiges Fotovoltaik-Modul 4 an den Eckbereichen mit vier oder aber auch mehr Vorrichtungen 2 befestigt werden. An dem Fotovoltaik-Modul 4 sind somit in den beiden oberen Eckbereichen jeweils eine Vorrichtung 2 angeordnet, die an der oberen Montageschiene 7 (Fig. 1) befestigt sind und an den beiden unteren Eckbereichen des Fotovoltaik-Moduls 4 sind ebenfalls jeweils eine Vorrichtung 2 angeordnet, die an der unteren Montageschiene 7 befestigt sind (Fig. 1).

Insgesamt betrachtet sind mit dem erfindungsgemäßen System 1 wesentliche Vorteile verbunden. Das Befestigen von Anbauteilen 3 an Trägerteilen 5 erfolgt in konstruktiv einfacher Weise. Dadurch können Kosten bei der Herstellung der Vorrichtung 2 und des Systems 1 eingespart werden und aufgrund der fehlenden Vorspannung der Blattfedern 10 in der Vormontagestellung tritt keine unbeabsichtigte Bewegung bzw. Auslösung der Halteelemente 8 als Blattfedern 10 auf. Im Vormontagezustand treten somit an der Vorrichtung 2 bei geringen auf die Vorrichtung 2 einwirkenden Kräften keine Schäden an der Vorrichtung 2 bzw. dem System 1 auf.

## Patentansprüche

1. System (1) zum Befestigen eines Anbauteiles (3) an wenigstens einem Trägerteil (5) mittels wenigstens einer Vorrichtung (2), umfassend
- die wenigstens eine Vorrichtung (2) mit wenigstens einem bewegbaren Halteelement (8), welches oder welche beim Einführen in eine Öffnung (19) des Trägerteiles (5) aufgrund eines Kontaktes zwischen dem wenigstens einen Halteelement (8) und dem Trägerteil (5) in eine Voreingreifstellung bewegbar ist und mittels einer Rückbewegung des wenigstens einen Halteelementes (8) nach dem Einführen in die Öffnung (19) in eine Hintergreifstellung bewegbar ist, so dass das Trägerteil (5) von dem wenigstens einen Halteelement (8) an einer Greiffläche (22) hintergreifbar ist für eine formschlüssige Verbindung zwischen dem wenigstens einen Halteelement (8) und dem Trägerteil (5) und wenigstens einem Mittel (25) zur Fixierung des Anbauteiles (3) an der wenigstens einen Vorrichtung (2),
- wenigstens ein Trägerteil (5),
**dadurch gekennzeichnet, dass**
die Vorrichtung (2) wenigstens ein elastisches Element (9) umfasst und das wenigstens eine Halteelement (8) mittels des wenigstens einen elastischen Elementes (9) von der Voreingreifstellung in die Hintergreifstellung bewegbar ist
und/oder
das Trägerteil (5) die Öffnung (19) aufweist und die Öffnung (19) ein Ende eines von dem Trägerteil (5) eingeschlossenen Innenraumes (20), insbesondere eine Trägernut (21), ist
und/oder
das Trägerteil (5) mit der Greiffläche (22) ausgebildet ist und in der Hintergreifstellung die Greiffläche (22) von dem wenigstens einen Halteelement (8) formschlüssig hintergriffen ist.

2. System nach Anspruch 1,
**dadurch gekennzeichnet, dass**
das wenigstens eine Halteelement (8) als das elastisches Element (9) ausgebildet ist.

3. System nach Anspruch 1 oder 2,
**dadurch gekennzeichnet, dass**
das elastische Element (9) als eine Blattfeder (10) ausgebildet ist.

4. System nach Anspruch 3,
**dadurch gekennzeichnet, dass**
die Blattfeder (10) mit wenigstens einem Rastarm (11) zur Verrastung an der Greiffläche (22) ausgebildet ist
und/oder
der wenigstens eine Rastarm (11) an der Greiffläche (22) verrastet ist.

5. System nach einem oder mehreren der vorhergehenden Ansprüche,
**dadurch gekennzeichnet, dass**
das wenigstens eine Halteelement (8), insbesondere die Blattfeder (10), form- und/oder kraftschlüssig an der wenigstens einen Vorrichtung (2) befestigt ist.

6. System nach einem oder mehreren der vorhergehenden Ansprüche,
**dadurch gekennzeichnet, dass**
die wenigstens eine Vorrichtung (2) eine Vorrichtungsschiene (31) oder eine Vorrichtungsleiste umfasst
und/oder
die wenigstens eine Vorrichtung (2) eine Trägerplatte (26) oder ein Gitter als Mittel (25) zur Fixierung des Anbauteiles (3) an der wenigstens einen Vorrichtung (2) umfasst.

7. System nach einem oder mehreren der vorhergehenden Ansprüche,
**dadurch gekennzeichnet, dass**
an der wenigstens einen Vorrichtung (2), insbesondere unterseitig an der Trägerplatte (26), ein Vorrichtungssteg (15) mit einem Absatz (16) ausgebildet ist und die Blattfeder (10) eine Haltezunge (12) aufweist, welche den Absatz (16) an der Vorrichtung (2) hintergreift und/oder
an der wenigstens einen Vorrichtung (2) eine Vorrichtungsnut (17), insbesondere zwischen der Trägerplatte (26) und dem Vorrichtungssteg (15), ausgebildet ist
und/oder
an der wenigstens einen Vorrichtung (2), insbesondere dem Vorrichtungssteg (15), ein Vorrichtungsschlitz (18) ausgebildet ist und die Blattfeder (10) in den Vorrichtungsschlitz (18) eingreift.

8. System nach einem oder mehreren der vorhergehenden Ansprüche,
**dadurch gekennzeichnet, dass**
an der Vorrichtung (2) in Längsrichtung mehrere Halteelemente (8) befestigt sind
und/oder
das wenigstens eine Halteelement (8) in der Hintergreifstellung wenigstens teilweise, insbesondere vollständig, in einem von dem Trägerteil (5) eingeschlossenen Innenraum (20), insbesondere der Trägernut (21), angeordnet ist
und/oder
eine kraft- und/oder formschlüssige Verbindung zwischen dem wenigstens einen Halteelement (8) und dem Trägerteil (5) herstellbar ist oder besteht.

9. System nach einem oder mehreren der vorhergehenden Ansprüche,
**dadurch gekennzeichnet, dass**
die Greiffläche (22) als eine im Wesentlichen ebene Fläche ausgebildet ist.

10. System nach einem oder mehreren der Ansprüche 7 bis 9,
**dadurch gekennzeichnet, dass**
an dem Trägerteil (5) ein Tragsteg (23) ausgebildet ist und vorzugsweise der Tragsteg (23) den Innenraum (20), insbesondere die Trägernut (21), teilweise begrenzt und in der Hintergreifstellung der Tragsteg (23) in der Vorrichtungsnut (17) angeordnet ist.

11. System nach einem oder mehreren der vorhergehenden Ansprüche,
**dadurch gekennzeichnet, dass**
in der Hintergreifstellung die Vorrichtung (2), insbesondere die Trägerplatte (26), auf dem Tragsteg (23) aufliegt.

12. System nach einem oder mehreren der vorhergehenden Ansprüche,
**dadurch gekennzeichnet, dass**
das Trägerteil (5) eine Tragschiene (6) oder eine Montageschiene (7) ist.

13. System nach einem oder mehreren der vorhergehenden Ansprüche,
**dadurch gekennzeichnet, dass**
das System (2) zwei, insbesondere identische, Trägerteile (5) aufweist und die beiden Trägerteile (5) im Wesentlichen parallel zueinander ausgerichtet sind und vorzugsweise die Öffnungen (19) der Innenräume (20) der beiden Trägerteile (5) in die gleiche Richtung ausgerichtet sind.

14. System nach Anspruch 13,
**dadurch gekennzeichnet, dass**
an jedem der beiden Trägerteile (5) wenigstens eine Vorrichtung (2) befestigt ist, vorzugsweise an jedem der beiden Trägerteile (5) wenigstens zwei Vorrichtungen (2) befestigt sind.

15. System nach einem oder mehreren der vorhergehenden Ansprüche,
**dadurch gekennzeichnet, dass**
in der Hintergreifstellung das elastische Element (9) vorgespannt ist.
